# FASCICULE DE BREVET EUROPEEN

(11) **EP 1 956 216 B1**
(45) Date de publication et mention de la délivrance du brevet: **19.04.2017**
(21) Numéro de dépôt: 08101360.9
(22) Date de dépôt: 07.02.2008
(51) Int. Cl.: F02C 9/00, F01D 21/00

(54) **Installation de commande de turbomachine équipée d'un système de vérification d'équipement à puce passive d'identification par radiofréquence**
Steueranlage für Strömungsmaschine mit einem Überprüfungssystem für Geräte mit Passivchip mit Hilfe von Radiofrequenz
Turbomachine control installation equipped with a system for verifying equipment with a passive radiofrequency identification tag

(30) Priorité: 09.02.2007 FR 0753177
(43) Date de publication de la demande: 13.08.2008
(73) Titulaire: Safran Electronics & Defense, 92100 Boulogne-Billancourt (FR)
(72) Inventeur: Henriot, Olivier, Marie, 91830, Le Coudray Montceau (FR); Hodinot, Laurent, Gilbert, Yves, 77240, Cesson (FR); Lacombe, Bertrand, 75019, Paris (FR); Raes, Marc, 91800, Brunoy (FR)
(74) Mandataire: Ilgart, Jean-Christophe

(56) Documents cités:
- JP-A- 2006 242 924
- US-A1- 2005 287 386
- WOLF-ECKHART BULST ET AL: "State of the Art in Wireless Sensing with Surface Acoustic Waves" IEEE TRANSACTIONS ON INDUSTRIAL ELECTRONICS, IEEE SERVICE CENTER, PISCATAWAY, NJ, US, vol. 48, no. 2, avril 2001 (2001-04), XP011023793 ISSN: 0278-0046

## Description

La présente invention se rapporte de façon générale aux installations de commande de turbomachine, de préférence pour aéronef.

Elle s'applique en particulier pour les installations de commande comprenant un dispositif de régulation de turbomachine du type FADEC (de l'anglais « Full Authority Digitial Engine Control »), également dénommé calculateur de régulation. Une installation de commande d'une turbomachine selon l'art antérieur est connue du document US2005/0287386 A1. L'invention a pour but de présenter une installation de commande permettant d'extraire de façon électronique des informations concernant un ou plusieurs équipements de turbomachine reliés au dispositif de régulation, tels que des équipements hydromécaniques (de l'anglais « HydroMechanical Unit »), des équipements de régulation de carburant (de l'anglais « Fuel Monitoring Unit »), ou encore tout autre équipement, même mécanique, afin de préférence d'optimiser la régulation de la turbomachine par prise en compte de ces informations. De plus, à titre indicatif, il peut être prévu d'empêcher le démarrage de la turbomachine si les informations extraites et vérifiées indiquent qu'au moins l'un des équipements concernés n'est pas conforme.

Pour ce faire, l'invention a pour objet une installation de commande d'une turbomachine, comprenant :
- un dispositif de régulation de turbomachine,
- au moins un équipement de turbomachine disposé à distance dudit dispositif de régulation par lequel il est commandé, et auquel il est relié électriquement, et
- un système de vérification dudit équipement, ledit système comportant :
   - une antenne émettrice/réceptrice reliée électriquement audit dispositif de régulation,
   - une puce passive d'identification par radiofréquence comprenant une antenne et une puce électronique, ladite puce passive d'identification par radiofréquence étant montée sur ledit équipement et intégrant des informations concernant ce même équipement, ladite puce passive d'identification par radiofréquence étant conçue pour émettre vers ladite antenne émettrice/réceptrice un signal radiofréquence comprenant lesdites informations, en réponse à un signal radiofréquence envoyé par ladite antenne émettrice/réceptrice pour la vérification dudit équipement,
   ladite installation étant également telle que ladite antenne émettrice/réceptrice est montée sur ledit équipement, et lesdites informations concernant l'équipement comprennent au moins l'une des données suivantes :
   - des données relatives à la caractérisation de l'équipement, telles que des données concernant les propriétés de l'équipement, et/ou les caractéristiques de cet équipement testé et mesuré sur un banc d'essai après sa production,
   - des données relatives au numéro de pièce et au numéro de série des principaux composants de l'équipement, respectivement dénommés « P/N » (de anglais « Part Number ») et « S/N » (de anglais « Serial Number »),
   - des données relatives à des dates de fabrication et de réparation de l'équipement,
   - des données relatives au fabriquant de l'équipement, sous la forme d'un code spécifique crypté.

Ainsi, grâce à la présence du système de vérification proposé, l'installation selon l'invention est effectivement en mesure d'extraire de façon électronique des informations concernant un ou plusieurs équipements de turbomachine reliés au dispositif de régulation, ces informations vérifiées par le dispositif de régulation permettant de préférence d'optimiser la régulation de la turbomachine.

De plus, le fait d'employer une puce d'identification par radiofréquence de nature passive et sans contact permet d'éviter les problèmes de certification, habituellement uniquement requis pour les solutions technologiques du type « électronique active ». A titre de rappel, les puces passives d'identification par radiofréquence, également dénommées étiquettes passives d'identification par radiofréquence, étiquettes passives RFID (de l'anglais « Radio Frequency IDentification »), ou encore transpondeur, utilisent l'énergie propagée à courte distance par le signal radiofréquence envoyé par l'antenne émettrice/ réceptrice.

Par ailleurs, le fait de déporter l'antenne émettrice/réceptrice sur l'équipement portant la puce passive permet avantageusement de l'approcher au plus prêt de cette dernière, et donc d'assurer une transmission satisfaisante entre ces deux éléments, malgré l'environnement métallique de la turbomachine fortement susceptible de nuire à la bonne circulation des ondes radio.

Avec une telle configuration, la puce passive peut alors communiquer avec le dispositif de régulation de turbomachine, de préférence du type FADEC, par exemple lors du démarrage de ce dernier. Cependant, la puce est également susceptible de communiquer avec un terminal RFID standard, par exemple pour sa programmation. De cette manière, il doit être compris que l'un des avantages inhérents à la présente invention réside dans la possibilité, dans les ateliers de fabrication et/ou de maintenance, de programmer la puce passive de manière indépendante du dispositif de régulation, qui est lui embarqué sur la turbomachine.

Le dispositif de régulation peut alors être programmé pour adapter les lois de régulation commandant les équipements de turbomachine, en fonction des informations transmises par la puce passive d'identification par radiofréquence au dispositif de régulation, via l'antenne émettrice/réceptrice et en réponse à un signal radiofréquence de vérification envoyé par celle-ci. Alternativement ou simultanément, ces informations pourraient conduire à l'émission d'un signal d'erreur par le dispositif de régulation, dans le cas où l'une de ces informations vérifiées serait analysée comme « non correcte » par ce dispositif de régulation. D'une façon plus générale, le dispositif de régulation de type FADEC pourrait être programmé afin d'utiliser les informations stockées dans la puce passive, qu'il reçoit par voie RFID, pour effectuer toute vérification jugée utile pour l'homme du métier, sans sortir du cadre de l'invention.

A titre d'exemple indicatif, si toutes les informations vérifiées sont jugées « correctes », alors le dispositif de régulation du type FADEC charge les données de caractérisation en mémoire, et les met à disposition d'un logiciel applicatif de régulation afin d'optimiser les lois de régulation. En revanche, si les informations vérifiées sont jugées « non correctes », alors le FADEC charge une table de caractérisation par défaut qui permet d'assurer la mission dans des conditions normales de sécurité, mais de moindres performances.

Toujours à titre indicatif, pour des raisons de sûreté de fonctionnement, lors d'une remise à zéro « Reset » anormale du FADEC, celui-ci utilise soit la table de caractérisation par défaut afin de limiter le temps d'initialisation au strict minimum et de pouvoir tout de même assurer la mission, soit la table sauvegardée en « novram » (de l'anglais « NOn Volatile Random Access Memory) lors de la mise sous tension du FADEC.

Dans la présente invention, la puce passive de type ROM (de l'anglais « Read Only Memory ») est de préférence programmable / chargeable qu'une seule fois, et ce afin de garantir l'intégrité des informations contenues. Ainsi, la puce passive à lecture seule, qui ne peut être reprogrammée, est de préférence changée à chaque opération de maintenance de l'équipement de turbomachine associé, où encore dès lors que cette opération conduit à modifier le numéro de pièce et/ou le numéro de série des principaux composants de l'équipement.

Il est rappelé que la nature RFID de la transmission des informations de la puce passive vers l'antenne émettrice/réceptrice, généralement associée à un lecteur/encodeur faisant partie intégrante du dispositif de régulation, se caractérise par un fonctionnement à basse ou moyenne fréquence, à savoir à des fréquences comprises entre environ 9 KHz et quelques MHz. De manière connue, le champ magnétique généré par l'antenne émettrice/réceptrice alimente et active la puce passive, qui, pour transmettre les informations qu'elle contient, crée une modulation d'amplitude ou de phase sur la fréquence porteuse. Ainsi, le lecteur reçoit les informations à vérifier, et les transforme en mode binaire. Il est précisé que pour la transmission allant du lecteur/encodeur vers la puce passive, via l'antenne émettrice/réceptrice, l'opération est symétrique.

Par ailleurs, il est possible, grâce aux données relatives à la caractérisation de l'équipement, d'optimiser les lois de régulation par l'utilisation des tables de caractérisation associées à l'équipement. Il est aussi possible, grâce aux données relatives aux P/N et S/N des principaux composant de l'équipement, d'optimiser la gestion et la traçabilité de l'équipement concerné. Il est aussi possible, grâce aux données relatives à des dates de fabrication et de réparation de l'équipement, de gérer d'une manière avancée la traçabilité de l'équipement. En effet, grâce par exemple à un lecteur portatif, relié à une base de données, il est possible de suivre tout l'historique de l'équipement.

A titre indicatif, les informations concernant l'équipement comprennent de préférence chacune des données précitées.

De préférence, toujours pour des raisons d'amélioration de la transmission RFID, ladite antenne émettrice/réceptrice est située en regard de ladite puce passive d'identification par radiofréquence, et encore plus préférentiellement à une distance de cette puce inférieure ou égale à 1 cm.

De préférence, ladite puce passive d'identification par radiofréquence est solidarisée à un élément amovible dudit équipement. De cette façon, la puce passive peut être facilement mise en place sur l'élément amovible à distance de l'équipement implanté sur la turbomachine, puis seulement ultérieurement rapportée sur cet équipement, par montage de l'élément amovible.

A titre indicatif, ledit élément amovible dudit équipement est un élément vissé sur un corps de l'équipement, et prend par exemple la forme d'une vis ou d'un bouchon.

Alternativement, on peut prévoir que ledit élément amovible dudit équipement est une plaque d'identification et de caractérisation dudit équipement.

Quoi qu'il en soit, ladite puce passive d'identification par radiofréquence est préférentiellement noyée ou mise à force dans ledit élément amovible. A cet égard, il est précisé qu'elle est de préférence noyée dans de la résine, et que, dans l'autre cas envisagé où elle est mise à force dans l'élément amovible, elle peut également être préalablement noyée dans de la résine avant d'être assemblée sur l'élément amovible.

De manière préférentielle, ladite antenne émettrice/réceptrice est également solidarisée audit élément amovible, bien qu'il pourrait en être autrement, en particulier lorsque l'élément amovible est la plaque d'identification et de caractérisation précitée.

De préférence, ledit équipement est un équipement hydromécanique ou HMU, de l'anglais « HydroMechanical Unit »), un équipement de régulation de carburant ou FMU (de l'anglais « Fuel Monitoring Unit »), ou un capteur quelconque.

De préférence, l'installation de commande selon l'invention comprend plusieurs équipements de turbomachine, chacun équipé de son propre système de vérification communiquant avec ledit dispositif de régulation.

Pour ce faire, on prévoit donc :
- plusieurs équipements de turbomachine disposés à distance dudit dispositif de régulation par lequel ils sont commandés, et auquel ils sont reliés électriquement, et
- un système de vérification propre à chaque équipement, chaque système comportant :
   - une antenne émettrice/réceptrice reliée électriquement audit dispositif de régulation,
   - une puce passive d'identification par radiofréquence comprenant une antenne et une puce électronique, ladite puce passive d'identification par radiofréquence étant montée sur ledit équipement associé et intégrant des informations concernant ce même équipement associé, ladite puce passive d'identification par radiofréquence étant conçue pour émettre vers ladite antenne émettrice/réceptrice un signal radiofréquence comprenant lesdites informations, en réponse à un signal radiofréquence envoyé par ladite antenne émettrice/réceptrice pour la vérification dudit équipement associé,
ladite installation étant également telle que chaque antenne émettrice/réceptrice est montée sur son équipement associé.

Dans cette configuration où il est effectivement prévu une antenne émettrice/réceptrice par puce passive, l'installation comporte alors préférentiellement un commutateur comprenant plusieurs sorties chacune associée à l'une des antennes émettrices/réceptrices des systèmes de vérification.

Par conséquent, grâce au commutateur, de préférence analogique, le dispositif de régulation du type FADEC peut « interroger » alternativement chacune des puces passives.

Enfin, l'invention a pour autre objet une turbomachine tel qu'un turboréacteur d'aéronef, comprenant une installation de commande telle que décrite ci-dessus.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique d'une installation de commande de turbomachine pour aéronef, selon un mode de réalisation préféré de la présente invention ;
- la figure 2 représente une vue détaillée de côté de l'un des équipements de turbomachine appartenant à l'installation de commande montrée sur la figure 1 ;
- la figure 3 représente une vue détaillée de dessus de l'équipement montré sur la figure 2 ;
- la figure 4 représente une vue en perspective d'un bouchon amovible de l'équipement montré sur les figures 2 et 3, intégrant une puce passive d'identification par radiofréquence ;
- la figure 5 est une vue en coupe prise selon la ligne V-V de la figure 4, le bouchon amovible étant représenté dans un état occupé avant la mise en place de la puce passive ;
- la figure 6 est une vue partielle de la figure 5, sur laquelle la puce passive est représentée montée sur le bouchon amovible ;
- la figure 7 représente une vue détaillée de côté de l'un des équipements de turbomachine appartenant à l'installation de commande montrée sur la figure 1, l'équipement se trouvant sous la forme d'un autre mode de réalisation préféré de la présente invention ;
- la figure 8 représente une vue partielle et agrandie de celle montrée sur la figure 7, représentant une plaque d'identification et de caractérisation de l'équipement, sur laquelle est montée une puce passive d'identification par radiofréquence ; et
- la figure 9 est une vue en coupe prise selon la ligne IX-IX de la figure 8, sur laquelle la puce passive est représentée montée sur la plaque d'identification et de caractérisation.

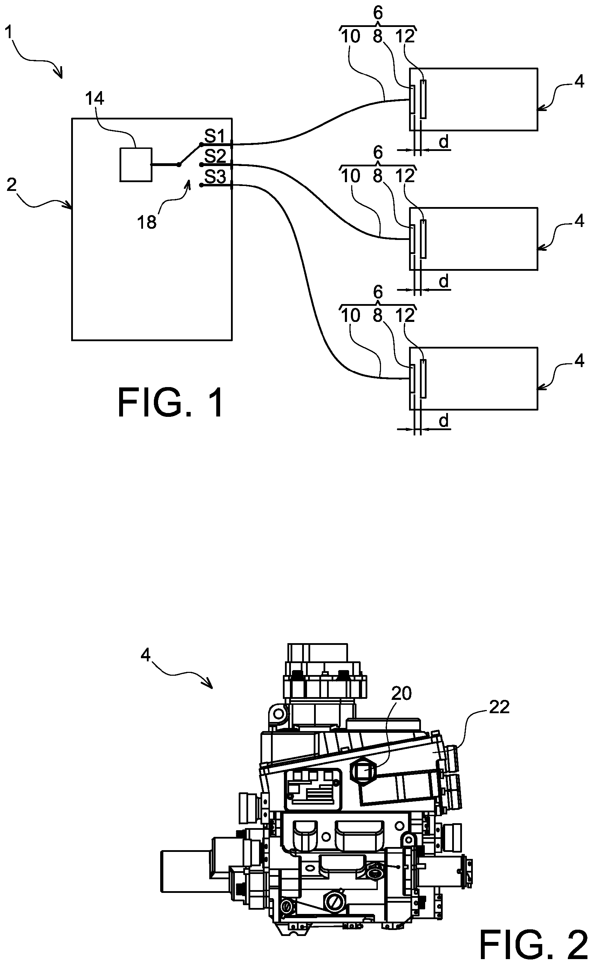

En référence à la figure 1, on voit une installation de commande 1 de turbomachine pour aéronef, selon un mode de réalisation préféré de la présente invention. Cette installation 1 comprend un dispositif de régulation de turbomachine 2, également dénommé FADEC comme indiqué précédemment, ce FADEC 2 étant implanté sur la turbomachine. En outre, l'installation 1 est équipée de plusieurs équipements de turbomachine 4, chacun disposé à distance du FADEC 2 par lequel il est commandé et auquel il est relié électriquement, par un réseau de câbles (non représentés) également dénommé harnais. A titre indicatif, les équipements 4 sont ceux habituellement rencontrés sur les turbomachines, à savoir par exemple des équipements hydromécaniques ou HMU, des équipements de régulation de carburant ou FMU, des capteurs quelconques, etc.

L'une des particularités de la présente invention réside dans la fourniture, pour chacun des équipements de turbomachine 4, d'un système de vérification 6 de l'équipement concerné, dont le but premier est de transmettre par voie RFID des informations relatives à l'équipement 4 vers le FADEC 2 programmé pour les vérifier, et pour engendrer des actions spécifiques en fonction du contenu de ces informations.

A titre d'exemple illustratif, le FADEC 2 peut être programmé pour adapter les lois de régulation commandant les équipements 4, en fonction des informations qu'il reçoit en ce qui concerne ces équipements. D'autre part, ces informations pourraient également conduire à l'émission d'un signal d'erreur par le FADEC 2, dans le cas où au moins l'une de ces informations vérifiées serait analysée comme « non correcte » par ce FADEC. Une information jugée « non correcte » pourrait également engendrer l'interdiction de démarrer la turbomachine, sans sortir du cadre de l'invention.

Pour ce faire, chaque système de vérification 6, associé à un équipement 4 donné, comprend une antenne émettrice/réceptrice 8 reliée électriquement au FADEC 2, par l'intermédiaire d'un câble 10 dont l'une des extrémités est en effet connectée électriquement au FADEC 2, comme montré sur la figure 1. Le câble électrique d'antenne 10 est de préférence placé dans le harnais correspondant à l'équipement concerné.

Outre l'antenne émettrice/réceptrice 8, qui prend par exemple la forme d'une antenne simple boucle avec une impédance de 50 ohms, chaque système 6 intègre également une puce passive d'identification par radiofréquence 12, montée sur son équipement associé 4, à savoir à distance du FADEC 2. La puce 12, également dénommée puce ou étiquette passive RFID, est du type à lecture seule, et de préférence programmable / chargeable qu'une seule fois afin de garantir l'intégrité des informations contenues relative à l'équipement 4.

Cette puce passive 12 peut prendre toute forme connue de l'homme du métier, et intègre donc de manière classique une antenne et une puce électronique dans laquelle sont stockées les informations concernant l'équipement 4.

La transmission des informations peut donc s'effectuer d'une manière connue en soit, à savoir par voie RFID. Ainsi, le FADEC 2 comprend un lecteur/encodeur 14 capable d'émettre, via l'antenne émettrice/réceptrice 8 du système 6, un signal radiofréquence pour la vérification de l'équipement 4 concerné, à savoir pour la vérification des données chargées dans la puce électronique. Lorsque ce signal est envoyé, le champ magnétique généré par l'antenne émettrice/réceptrice 8 alimente et active la puce passive 12, qui en retour, pour transmettre les informations qu'elle contient, crée une modulation d'amplitude ou de phase sur la fréquence porteuse. Cela se traduit par l'émission d'un signal radiofréquence contenant les informations relatives à l'équipement 2, signal qui est ensuite reçu par l'antenne 8, et acheminé par cette dernière vers le lecteur/encodeur 14 le transformant en mode binaire afin de pouvoir être exploité par le FADEC 2. A titre indicatif, cette exploitation prend par exemple la forme d'une comparaison des informations stockées dans la puce passive 12, avec des informations actualisées stockées dans une mémoire réinscriptible du FADEC 2.

Ces informations sur les équipements 4 peuvent être de tout ordre, seuls quelques exemples étant donnés ci-après à titre d'exemples indicatifs. Il peut en effet s'agir de données relatives à la caractérisation de l'équipement, de données relatives aux P/N et S/N des principaux composants de l'équipement, de données relatives à des dates de fabrication et de réparation de l'équipement, ou encore de données relatives au fabriquant de l'équipement, sous la forme d'un code spécifique crypté.

Une autre particularité de la présente invention réside dans le fait que l'antenne émettrice/réceptrice 8 est montée sur l'équipement 4 auquel elle est associée, comme montré schématiquement sur la figure 1. Plus spécifiquement, pour des raisons d'amélioration de la transmission RFID susceptible d'être perturbée par l'environnement métallique de la turbomachine, l'antenne émettrice/réceptrice 8 est située en regard de la puce passive 12, à une distance « d » de celle-ci inférieure ou égale à 1 cm. De préférence, l'antenne 8 et la puce passive 12 sont agencées dans deux plans parallèles.

Le lecteur/encodeur 14 est de préférence commun à chacun des systèmes de vérification 6, bien que ceci pourrait en être autrement, sans sortir du cadre de l'invention. Dans cette configuration où il est prévu une antenne émettrice/réceptrice 8 par puce passive 12, l'installation 1 comporte alors un commutateur analogique 18 relié électriquement au lecteur 14, et comprenant autant de sorties que d'équipements 4 équipés d'une puce passive 12. Dans le cas schématisé de la figure 1 où trois équipements 4 ont été prévus, chacune des trois sorties S1, S2, S3 du commutateur 18 est associée à l'une des trois antennes émettrices/réceptrices 8 appartenant respectivement aux trois systèmes de vérification 6. Comme le montre la figure 1, c'est l'une des extrémités du câble d'antenne 10 qui est raccordée sur l'une des sorties S1, S2, S3, l'autre extrémité du câble d'antenne 10 étant raccordée sur l'antenne 8.

Par conséquent, grâce au commutateur 18 commandé par le FADEC 2 auquel il appartient, ce dernier peut interroger alternativement chacune des puces passives 12 pour vérifier les informations concernant l'équipement logeant la puce 12 interrogée, ces puces passives 12 étant donc alimentées électriquement, par l'antenne 8 associée, uniquement durant l'interrogation. Les puces n'étant interrogées de préférence qu'au démarrage de la turbomachine, il en résulte qu'aucune d'elles n'est alimentée durant le vol de l'aéronef.

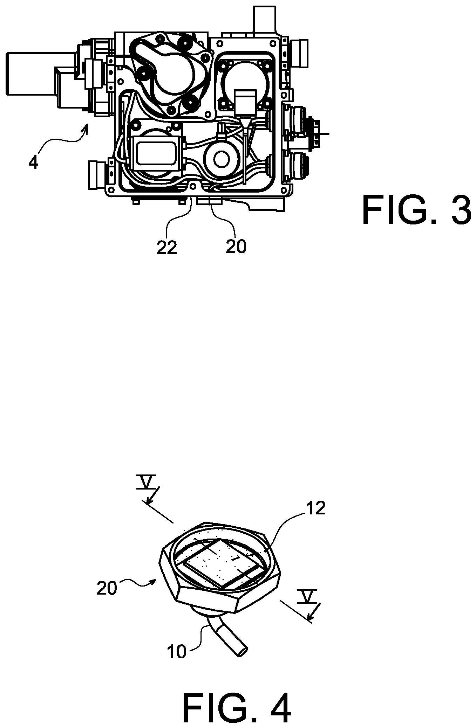

En référence aux figures 2 et 3, on voit de manière plus détaillée l'un des équipements de turbomachine 4, et plus précisément un équipement de régulation de carburant, ou FMU.

L'une des particularités de ce mode de réalisation préféré réside dans la présence d'un élément amovible 20 du type bouchon fileté ou vis, monté de manière vissée sur le corps 22 de l'équipement, et plus préférentiellement sur une façade de ce corps de manière à pouvoir être facilement monté / démonté par un opérateur. La particularité de cet élément vissé 20 est qu'il sert au logement de la puce passive 12 comme montré sur la figure 4, et de préférence également à l'implantation de l'antenne émettrice/réceptrice 8. A titre indicatif, dans le cas où il s'agit d'un bouchon, ce dernier peut simultanément servir à obturer un réservoir de fluide intégré à l'équipement 4.

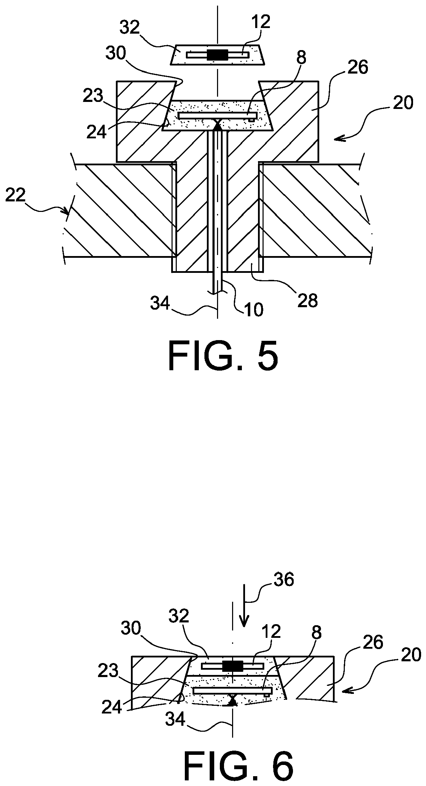

Plus précisément en référence aux figures 5 et 6, on peut voir que l'antenne émettrice/réceptrice 8 est solidarisée à l'élément amovible 20, puisqu'elle est noyée à l'aide de résine 23 dans un réceptacle 24 pratiqué dans la tête 26 de l'élément 20. Comme visible sur la figure 5, la tête de vis 26 se prolonge par une portion filetée 28 vissée sur la façade du corps 22, cette portion filetée 28 étant traversée par le câble d'antenne 10 connecté électriquement à l'antenne 8 à l'une de ses extrémités.

D'autre part, la tête de vis 26 forme avec le bloc de résine 23 un autre réceptacle ouvert 30, destiné à loger la puce passive 12. Pour ce faire, cette dernière est de préférence préalablement noyée dans de la résine 32 pour former un bloc de forme complémentaire de celle du réceptacle ouvert 30, dont le fond est formé par la résine 23 enrobant l'antenne 8. Cette forme est par exemple du type trapèze en section longitudinale passant par l'axe 34 de l'élément amovible 20, ou toute autre forme permettant un montage à force / clipsé du bloc intégrant la puce passive 12, dans le réceptacle ouvert 30.

Cette configuration permet avantageusement un remplacement facile et rapide de la puce passive 12, puisqu'il suffit alors de détruire celle initialement prévue dans le réceptacle 30, de la retirer, et de remonter à force un nouveau bloc de résine intégrant la nouvelle puce passive 12, dans le réceptacle 30 comme schématisé par la flèche 36.

Naturellement, la puce passive 12 pourrait être directement noyée dans le bouchon 20 afin de ne créer qu'une seule pièce avec celui-ci, ce qui impliquerait néanmoins de sacrifier l'intégralité du bouchon 20 en cas de changement de la puce passive 12, par exemple rencontré après l'accomplissement d'une opération de maintenance sur l'équipement concerné.

D'autre part, on pourrait également prévoir une solution dans laquelle l'antenne 8 ne formerait pas une seule pièce avec le bouchon 20, mais dans laquelle elle serait amovible, sans sortir du cadre de l'invention.

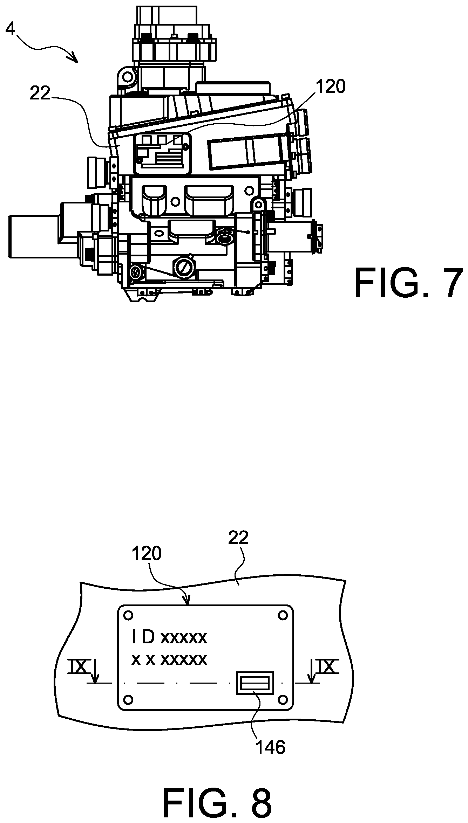

En référence aux figures 7 à 9, on peut apercevoir un autre mode de réalisation préféré dans lequel l'élément amovible qui loge la puce passive 12 n'est plus un bouchon vissé, mais une plaque d'identification et de caractérisation 120 de l'équipement 4. Cette plaque 120, qui peut être montée de manière vissée ou rivetée sur la façade du corps 22, présente la particularité de disposer d'une portion percée emboutie 146 formant logement pour la puce passive 12.

En effet, la portion percée emboutie 146 forme un réceptacle 130 dans lequel la puce passive 12 peut être placée, avant qu'un bloc de résine 132 ne soit coulé dans ce réceptacle afin que la puce 12 et la plaque 120 ne forment ensemble qu'une seule pièce.

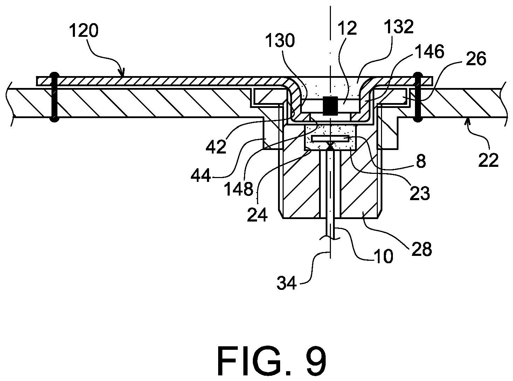

Comme montré sur la figure 9, la portion 146 emboutie en direction de la façade du corps 22 pénètre dans un réceptacle 42 d'un bouchon ou d'une vis 20 de conception sensiblement similaire à celle décrite ci-dessus, notamment en ce sens que l'élément amovible 20 intègre l'antenne émettrice/réceptrice 8. D'ailleurs, les éléments portant les mêmes références numériques correspondent à des éléments identiques ou similaires.

Lorsque le bouchon 20 est monté vissé sur une portion filetée 44 de la façade, et que la plaque 120 recouvre une partie de la façade ainsi que la tête 26 du bouchon 20 dans laquelle pénètre la portion percée emboutie 146, la puce 12 et l'antenne 8 se retrouvent situées en regard l'une de l'autre, à moins de 1 cm, de préférence de part et d'autre de l'ouverture 148 de la portion percée emboutie 146.

Dans cette configuration, le changement de la puce passive 12 nécessite de sacrifier l'intégralité de la plaque 120, ce qui permet néanmoins de s'assurer de la cohérence entre les informations inscrites sur la plaque 120, et celles enregistrées sur la puce passive 12. Cependant, un montage amovible de la puce passive 12 sur la plaque 120 pourrait être envisagé, sans sortir du cadre de l'invention, en prévoyant par exemple que cette puce 12 puisse être mise à force dans la plaque 120.

Une autre possibilité pourrait également consister à rendre l'antenne 8 solidaire de la plaque 120, en la montant sur cette dernière de façon amovible ou non amovible.

Bien entendu, diverses modifications peuvent être apportées par l'homme du métier à l'invention qui vient d'être décrite, uniquement à titre d'exemples non limitatifs.

## Revendications

1. Installation de commande (1) d'une turbomachine, qui comprend :
- un dispositif de régulation de turbomachine (2),
- au moins un équipement de turbomachine (4) disposé à distance dudit dispositif de régulation (2) par lequel il est commandé, et auquel il est relié électriquement, et
- un système de vérification (6) dudit équipement, ladite installation étant **caractérisée en ce que** ledit système comporte :
- une antenne émettrice/réceptrice (8) reliée électriquement audit dispositif de régulation (2),
- une puce passive d'identification par radiofréquence (12) comprenant une antenne et une puce électronique, ladite puce passive d'identification par radiofréquence (12) étant montée sur ledit équipement (4) et intégrant des informations concernant ce même équipement, ladite puce passive d'identification par radiofréquence (12) étant conçue pour émettre vers ladite antenne émettrice/réceptrice (8) un signal radiofréquence comprenant lesdites informations, en réponse à un signal radiofréquence envoyé par ladite antenne émettrice/réceptrice (8) pour la vérification dudit équipement,
ladite installation étant également **caractérisée en ce que** ladite antenne émettrice/réceptrice (8) est montée sur ledit équipement (4), et **en ce que** lesdites informations concernant l'équipement (4) comprennent au moins l'une des données suivantes :
- des données relatives à la caractérisation de l'équipement,
- des données relatives au numéro de pièce et au numéro de série des principaux composants de l'équipement,
- des données relatives à des dates de fabrication et de réparation de l'équipement,
- des données relatives au fabriquant de l'équipement, sous la forme d'un code spécifique crypté.

2. Installation de commande (1) selon la revendication 1, **caractérisée en ce que** ladite antenne émettrice/réceptrice (8) est située en regard de ladite puce passive d'identification par radiofréquence (12).

3. Installation de commande (1) selon la revendication 1 ou la revendication 2, **caractérisée en ce que** ladite antenne émettrice/réceptrice (8) est située à une distance (d) de ladite puce passive d'identification par radiofréquence (12) inférieure ou égale à 1 cm.

4. Installation de commande (1) selon l'une quelconque des revendications précédentes, **caractérisée en ce que** ladite puce passive d'identification par radiofréquence (12) est solidarisée à un élément amovible dudit équipement (20, 120).

5. Installation de commande (1) selon la revendication 4, **caractérisée en ce que** ledit élément amovible dudit équipement est un élément vissé (20) sur un corps (22) de l'équipement (4).

6. Installation de commande (1) selon la revendication 5, **caractérisée en ce que** ledit élément vissé (20) prend la forme d'une vis ou d'un bouchon.

7. Installation de commande (1) selon la revendication 4, **caractérisée en ce que** ledit élément amovible dudit équipement est une plaque d'identification et de caractérisation (120) dudit équipement.

8. Installation de commande (1) selon l'une quelconque des revendications 4 à 7, **caractérisée en ce que** ladite puce passive d'identification par radiofréquence (12) est noyée ou mise à force dans ledit élément amovible (20, 120).

9. Installation de commande (1) selon l'une quelconque des revendications 4 à 8, **caractérisée en ce que** ladite antenne émettrice/réceptrice (8) est également solidarisée audit élément amovible (20, 120).

10. Installation de commande (1) selon l'une quelconque des revendications précédentes, **caractérisée en ce que** ledit équipement (4) est un équipement hydromécanique, un équipement de régulation de carburant, ou un capteur.

11. Installation de commande (1) selon l'une quelconque des revendications précédentes, **caractérisée en ce qu'**elle comprend :
- plusieurs équipements de turbomachine (4) disposés à distance dudit dispositif de régulation (2) par lequel ils sont commandés, et auquel ils sont reliés électriquement, et
- un système de vérification (6) propre à chaque équipement (4), chaque système comportant :
- une antenne émettrice/réceptrice (8) reliée électriquement audit dispositif de régulation (2),
- une puce passive d'identification par radiofréquence (12) comprenant une antenne et une puce électronique, ladite puce passive d'identification par radiofréquence (12) étant montée sur ledit équipement associé (4) et intégrant des informations concernant ce même équipement associé, ladite puce passive d'identification par radiofréquence (12) étant conçue pour émettre vers ladite antenne émettrice/réceptrice (8) un signal radiofréquence comprenant lesdites informations, en réponse à un signal radiofréquence envoyé par ladite antenne émettrice/réceptrice (8) pour la vérification dudit équipement associé (4),
ladite installation étant également **caractérisée en ce que** chaque antenne émettrice/réceptrice (8) est montée sur son équipement associé (4).

12. Installation de commande (1) selon la revendication 11, **caractérisée en ce qu'**elle comporte un commutateur (18) comprenant plusieurs sorties (S1, S2, S3) chacune associée à l'une des antennes émettrices/réceptrices (8) des systèmes de vérification (6).

13. Turbomachine comprenant une installation de commande (1) selon l'une quelconque des revendications précédentes.

## Patentansprüche

1. Steueranlage (1) für ein Turbotriebwerk, welche aufweist:
- eine Turbotriebwerks-Regelvorrichtung (2),
- mindestens ein Turbotriebwerks-Ausrüstungsteil (4), das in Abstand von dieser Regelvorrichtung (2), von der es gesteuert wird und mit der es elektrisch verbunden ist, angeordnet ist, sowie
- ein System zur Überprüfung (6) des genannten Ausrüstungsteils,
**dadurch gekennzeichnet,**
**dass** das genannte System umfasst:
- eine Sende-Empfangsantenne (8), die mit der Regelvorrichtung (2) elektrisch verbunden ist,
- einen Passivchip zur Identifikation mittels Radiofrequenz (12), welcher eine Antenne und einen Mikrochip umfasst, wobei dieser Passivchip zur Identifikation mittels Radiofrequenz (12) an dem genannten Ausrüstungsteil (4) angebracht ist und Informationen bezüglich dieses Ausrüstungsteils sammelt, wobei dieser Passivchip zur Identifikation mittels Radiofrequenz (12) dazu konzipiert ist, an die genannte Sende-Empfangsantenne (8) ein Radiofrequenzsignal zu senden, das die genannten Informationen enthält, und zwar in Reaktion auf ein Radiofrequenzsignal, das von dieser Sende-Empfangsantenne (8) zwecks Überprüfung des genannten Ausrüstungsteils gesendet wurde,
wobei diese Steueranlage ferner **dadurch gekennzeichnet ist, dass** die genannte Sende-Empfangsantenne (8) an dem genannten Ausrüstungsteil (4) angebracht ist, und dadurch, dass die genannten Informationen über das Ausrüstungsteil (4) mindestens eine der folgenden Daten enthalten:
- Daten bezüglich der Kennzeichnung des Ausrüstungsteils,
- Daten bezüglich der Teilnummer und der Seriennummer der Hauptkomponenten des Ausrüstungsteils,
- Daten bezüglich des Herstellungsdatums und der Reparaturdaten des Ausrüstungsteils,
- Daten bezüglich des Herstellers des Ausrüstungsteils in Form eines verschlüsselten herstellerspezifischen Codes.

2. Steueranlage (1) nach Anspruch 1,
**dadurch gekennzeichnet,**
**dass** die genannte Sende-Empfangsantenne (8) sich in der Nähe des Passivchips zur Identifikation mittels Radiofrequenz (12) befindet.

3. Steueranlage (1) nach Anspruch 1 oder Anspruch 2,
**dadurch gekennzeichnet,**
**dass** die genannte Sende-Empfangsantenne (8) sich in einem Abstand (d) zu diesem Passivchip zur Identifikation mittels Radiofrequenz (12) befindet, der geringer als oder gleich 1 cm ist.

4. Steueranlage (1) nach einem der vorherigen Ansprüche,
**dadurch gekennzeichnet,**
**dass** dieser Passivchip zur Identifikation mittels Radiofrequenz (12) mit einem abnehmbaren Element (20, 120) des genannten Ausrüstungsteils fest verbunden ist.

5. Steueranlage (1) nach Anspruch 4,
**dadurch gekennzeichnet,**
**dass** dieses abnehmbare Element des genannten Ausrüstungsteils ein Schraubelement (20) an einem Körper (22) des Ausrüstungsteils (4) ist.

6. Steueranlage (1) nach Anspruch 5,
**dadurch gekennzeichnet,**
**dass** dieses Schraubelement (20) in Form einer Schraube oder eines Schraubstutzens vorgesehen ist.

7. Steueranlage (1) nach Anspruch 4,
**dadurch gekennzeichnet,**
**dass** dieses abnehmbare Element des genannten Ausrüstungsteils ein Identifikations- und Kennzeichnungsplättchen (120) des genannten Ausrüstungsteils ist.

8. Steueranlage (1) nach einem der Ansprüche 4 bis 7,
**dadurch gekennzeichnet,**
**dass** dieser Passivchip zur Identifikation mittels Radiofrequenz (12) in diesem abnehmbaren Element (20, 120) versenkt oder eingepresst ist.

9. Steueranlage (1) nach einem der Ansprüche 4 bis 8,
**dadurch gekennzeichnet,**
**dass** die genannte Sende-Empfangsantenne (8) ebenfalls fest mit dem abnehmbaren Element (20, 120) verbunden ist.

10. Steueranlage (1) nach einem der vorherigen Ansprüche,
**dadurch gekennzeichnet,**
**dass** das Ausrüstungsteil (4) ein mechanisch-hydraulisches Ausrüstungsteil, ein Ausrüstungsteil zur Treibstoffregelung oder ein Messfühler ist.

11. Steueranlage (1) nach einem der vorherigen Ansprüche,
**dadurch gekennzeichnet,**
**dass** sie aufweist:
- mehrere Turbotriebwerks-Ausrüstungsteile (4), die in Abstand von der Regelvorrichtung (2), von der sie gesteuert werden und mit der sie elektrisch verbunden sind, angeordnet sind, sowie
- ein System zur Überprüfung (6) für jedes Ausrüstungsteil, bestehend aus:
- einer Sende-Empfangsantenne (8), die mit der Regelvorrichtung (2) elektrisch verbunden ist,
- einem Passivchip zur Identifikation mittels Radiofrequenz (12), welcher eine Antenne und einen Mikrochip umfasst, wobei dieser Passivchip zur Identifikation mittels Radiofrequenz (12) an dem zugeordneten Ausrüstungsteil (4) angebracht ist und Informationen bezüglich dieses gleichen zugeordneten Ausrüstungsteils sammelt, wobei dieser Passivchip zur Identifikation mittels Radiofrequenz (12) dazu konzipiert ist, an die genannte Sende-Empfangsantenne (8) ein Radiofrequenzsignal zu senden, das die genannten Informationen enthält, und zwar in Reaktion auf ein Radiofrequenzsignal, das von dieser Sende-Empfangsantenne (8) zwecks Überprüfung des genannten zugeordneten Ausrüstungsteils (4) gesendet wurde,
wobei diese Steueranlage ferner **dadurch gekennzeichnet ist, dass** jede Sende-Empfangsantenne (8) an dem ihr zugeordneten Ausrüstungsteil (4) angebracht ist.

12. Steueranlage (1) nach Anspruch 11,
**dadurch gekennzeichnet,**
**dass** sie einen Schalter (18) mit mehreren Ausgängen (S1, S2, S3) aufweist, die jeweils einer der Sende-Empfangsantennen (8) der Überprüfungssysteme (6) zugeordnet sind.

13. Turbotriebwerk, das eine Steueranlage (1) nach einem der vorherigen Ansprüche aufweist.

## Claims

1. Control installation (1) of a turbo-machine, comprising:
- a turbo-machine regulation device (2),
- at least one turbo-machine unit (4) located remotely from said regulation device (2) by which it is controlled, and to which it is electrically connected, and
- a verification system (6) of said unit, said control installation being **characterized in that** said system features:
- an emitting/receiving antenna (8) electrically connected to said regulation device (2),
- a passive radiofrequency identification chip (12) comprising an antenna and an electronic chip, wherein said passive radiofrequency identification chip (12) is mounted on said unit (4) and incorporates information concerning this same unit, wherein said passive radiofrequency identification chip (12) is designed to emit to said emitting/receiving antenna (8) a radiofrequency signal comprising said information, in response to a radiofrequency signal sent by said emitting/receiving antenna (8) to verify said unit,
said installation is also **characterised in that** said emitting/receiving antenna (8) is mounted on said unit (4), and **in that** said information concerning the unit (4) comprises at least one of the following items of data:
- data concerning the characterisation of the unit,
- data concerning the part number and serial number of the main components of the unit,
- data concerning the manufacturing and repair dates of the unit,
- data concerning the manufacturer of the unit, in the form of a specific encrypted code.

2. Control installation (1) according to claim 1, **characterised in that** said emitting/receiving antenna (8) is positioned opposite said passive radiofrequency identification chip (12).

3. Control installation (1) according to claim 1 or claim 2, **characterised in that** said emitting/receiving antenna (8) is positioned at a distance (d) from said passive radiofrequency identification chip (12) less than or equal to 1 cm.

4. Control installation (1) according to any of the previous claims, **characterised in that** said passive radiofrequency identification chip (12) is attached to a removable element of said unit (20, 120).

5. Control installation (1) according to claim 4, **characterised in that** said removable element of said unit is a screwed element (20) on a body (22) of the unit (4).

6. Control installation (1) according to claim 5, **characterised in that** said screwed element (20) is in the form of a bolt or a plug.

7. Control installation (1) according to claim 4, **characterised in that** said removable element of said unit is an identification and characterisation plate (120) of said unit.

8. Control installation (1) according to any of claims 4 to 7, **characterised in that** said passive radiofrequency identification chip (12) is embedded or forced into said removable element (20, 120).

9. Control installation (1) according to any of claims 4 to 8, **characterised in that** said emitting/receiving antenna (8) is also attached to said removable element (20, 120).

10. Control installation (1) according to any of the previous claims, **characterised in that** said unit (4) is a hydro-mechanical unit, a fuel monitoring unit or a sensor.

11. Control installation (1) according to any of the previous claims, **characterised in that** it comprises:
- several turbo-machine units (4) positioned remotely from said regulation device (2) by which they are controlled, and to which they are electrically connected, and
- a verification system (6) specific to each unit (4), wherein each system features:
- an emitting/receiving antenna (8) electrically connected to said regulation device (2),
- a passive radiofrequency identification chip (12) comprising an antenna and an electronic chip, wherein said passive radiofrequency identification chip (12) is mounted in said associated unit (4) and incorporates information concerning this same associated unit, wherein said passive radiofrequency identification chip (12) is designed to emit to said emitting/receiving antenna (8) a radiofrequency signal comprising said information, in response to a radiofrequency signal sent by said emitting/receiving antenna (8) to verify said associated unit (4),
wherein said installation is also **characterised in that** each emitting/receiving antenna (8) is mounted on its associated unit (4).

12. Control installation (1) according to claim 11, **characterised in that** it features a switch (18) comprising several outputs (S1, S2, S3) each associated to one of the emitting/receiving antennae (8) of the verification systems (6).

13. Turbo-machine comprising a control installation (1) according to any of the previous claims.
